# EUROPÄISCHE PATENTSCHRIFT

(11) **EP 4 390 207 B1**
(45) Veröffentlichungstag und Bekanntmachung des Hinweises auf die Patenterteilung: **23.10.2024**
(21) Anmeldenummer: 22214874.4
(22) Anmeldetag: 20.12.2022
(51) Int. Cl.: F16L 37/413, F16L 37/23

(54) **KUPPLUNGSTEIL FÜR EINE HYDRAULIKKUPPLUNG**
COUPLING PART FOR A HYDRAULIC COUPLING
PIÈCE D'ACCOUPLEMENT POUR UN ACCOUPLEMENT HYDRAULIQUE

(43) Veröffentlichungstag der Anmeldung: 26.06.2024
(73) Patentinhaber: WALTER STAUFFENBERG GMBH & CO. KG, 58791 Werdohl (DE)
(72) Erfinder: Laufer, Klaus, 58540 Meinerzhagen (DE); Mahlich, Nikolas, 58840 Plettenberg (DE)
(74) Vertreter: Patentanwälte Dörner & Kötter PartG mbB

(56) Entgegenhaltungen:
- EP-A1- 0 745 802
- EP-A1- 3 473 912
- EP-B1- 0 744 572

## Beschreibung

Die Erfindung betrifft ein Kupplungsteil, insbesondere eine Kupplungsmuffe, zum Kuppeln mit einem korrespondierenden Kupplungsteil, insbesondere einem Kupplungsstecker, für eine Kupplung für Druckmittelleitungen, insbesondere Hydraulikleitungen, nach dem Oberbegriff des Patentanspruchs 1.

Das Kupplungselement weist einen Ventilstößel, ein Gehäuse, einen Muffeninnenkörper und eine Ventilhülse auf. Das Gehäuse weist einen durchgehenden, in Axialrichtung verlaufenden, Strömungskanal für ein Druckmittel ausbildenden ersten Durchgang auf.

Hydraulikkupplungen, nämlich eine Kombination aus Kupplungsmuffe und Kupplungsstecker, dienen dem Verbinden von zwei Abschnitten einer Druckmittelleitung und werden insbesondere dazu verwendet, hydraulische Geräte an eine Hydraulikquelle anzuschließen, beispielsweise zum Anschließen eines Werkzeugs an eine landwirtschaftliche Maschine oder eine Baumaschine.

Aus dem Stand der Technik sind sogenannte flachdichtende Kupplungsmuffen und Kupplungsstecker bekannt, die sich dadurch auszeichnen, dass im nicht verbundenen - nicht gekuppelten - Zustand durch die Bauteile des Kupplungssteckers oder der Kupplungsmuffe im Verbindungsschnittstellenbereich eine plane und geschlossene Fläche gebildet wird. Dadurch wird der Eintritt von Schmutz in das Gehäuse und zwischen die Bauteile verhindert sowie der Verlust von Druckmittel zuverlässig vermieden. Derartige flachdichtende Hydraulickupplungen eignen sich insbesondere für den Einsatz in schmutzigen und staubigen Umgebungen.

Das Einkuppeln einer Hydraulikkupplung, also das Herstellen einer formschlüssigen Verbindung zwischen einer Kupplungsmuffe und einem Kupplungsstecker, erfolgt üblicherweise dadurch, dass der Kupplungsstecker durch einen Benutzer in eine Kupplungsmuffe eingesteckt wird, wobei durch die durch den Benutzer aufgebrachte Kraft sowohl jeweils mindestens ein Ventil geöffnet wird, um eine Druckmittelleitung an dem Kupplungsstecker mit einer Druckmittelleitung an der Kupplungsmuffe strömungstechnisch zu verbinden, als auch eine formschlüssige Verbindung zwischen Kupplungsstecker und Kupplungsmuffe hergestellt wird, um die Verbindung bzw. den eingekuppelten Zustand zu stabilisieren.

Bekannte Hydraulikkupplungsmuffen umfassen einen in axialer Richtung fest in dem Gehäuse angeordneten Ventilstößel, dessen Ventilstößelkopf eine vordere, etwa kreisförmige Stirnfläche aufweist. Der der Stirnfläche abgewandte Bereich des Ventilstößelkopfes bildet einen Dichtsitz, der mit einem vorderen freien Ende der vorgenannten Ventilhülse zusammenwirken kann, um einen Fluiddurchgang durch das Innere der Ventilhülse zu verschließen, wenn die axial bewegliche Ventilhülse in axialer Richtung von der der Stirnfläche abgewandten Seite, also aus dem Inneren des Gehäuses in Richtung zu einem Hydraulikkupplungsstecker bewegt wird und am Ventilstößel anliegt.

Der vordere, mit dem Ventilstößel zusammenwirkende Bereich der Ventilhülse ist bei dieser vorbekannten Hydraulikkupplungsmuffe von innen mit dem Hydraulikfluid beaufschlagt, sodass dieses Fluid in einen angekuppelten Hydraulikstecker nur dann überfließen kann, wenn die Ventilhülse in axialer Richtung vom Ventilstößel bzw. von dessen Dichtsitz wegbewegt wird. Hierzu ist bei dieser vorbekannten Hydraulikkupplungsmuffe die Ventilhülse innerhalb des Gehäuses verschieblich angeordnet, sodass wahlweise der Fluiddurchgang geöffnet oder geschlossen werden kann. Die Ventilhülse bildet einen Kanal für das zu fördernde Hydraulikfluid, der durch eine relative Bewegung zwischen Ventilhülse und Ventilstößel verschließbar ist. Der Ventilstößel ist vom Hydraulikfluid umgeben.

In der EP 3 574 248 B1 wird bei den vorbekannten Hydraulikkupplungsmuffen die Problematik thematisiert, wonach die Ventilhülse in einer axialen Richtung gesehen eine erste Stirnseite mit einer axialen Fläche aufweise, die mit Fluid der Kupplung in Kontakt steht und in der entgegengesetzten zweiten axialen Richtung eine zweite axiale Stirnfläche aufweise, welche Stirnflächen sich deutlich unterschieden. Die Differenz zwischen den Größen der beiden axialen Stirnflächen bewirke bei anstehendem Druck eine Kraft auf die Ventilhülse, welche überwunden werden muss, wenn ein Kupplungsstecker in die Kupplungsmuffe eingeführt wird. Bei den Kupplungen nach dem Stand der Technik müsste das Hydrauliksystem abgeschaltet und drucklos gemacht werden, bevor das Kuppeln manuell vorgenommen werden kann.

Zur Beseitigung der vorgenannten Nachteile wird vorgeschlagen, die axialen Stirnflächen in beiden entgegengesetzten Richtungen gleich zu machen, um die resultierende Kraft aufgrund eines Größenunterschieds der beiden axialen Stirnflächen aufzuheben. Eine Hydraulikkupplungsmuffe mit einem entsprechenden Lösungsansatz ist auch in der WO 2011/134484 A1 offenbart.

Nachteilig an der in der EP 3 574 248 B1 sowie auch in der WO 2011/134484 A1 vorgeschlagenen Hydraulikkupplungsmuffe erweist sich jedoch, dass aufgrund der angestrebten gleichen axialen Stirnflächen die Ventilhülse einzig durch die Federkraft eines mit diesem verbundenen Federelements in Dichtposition gehalten wird. Es besteht die Gefahr, dass die Ventilhülse nach Überschreiten der Federkraft der Ventilfeder unkontrolliert in Richtung des Anschlussteils öffnen kann. Ein solches Überschreiten der Federkraft kann sich aus nicht zu vermeidenden Fertigungstoleranzen ergeben, wodurch eine Flächendifferenz in die eine oder die andere Richtung nicht zu vermeiden ist.

Gattungsgemäße Ausgestaltungen von Hydraulikkupplungsmuffen sind in der EP 0 745 802 A1 sowie der EP 0 744 572 B1 offenbart.

Hier will die Erfindung Abhilfe schaffen. Der Erfindung liegt die Aufgabe zu Grunde, ein Kupplungsteil, insbesondere eine Kupplungsmuffe, zum Kuppeln mit einem korrespondierenden Kupplungsteil, insbesondere einem Kupplungsstecker, einer Kupplung für Druckmittelleitungen, insbesondere Hydraulikleitungen, bereitzustellen, die eine Kupplung des Kupplungsteils (Kupplungsmuffe) ohne Kraftaufwand mit einem korrespondierenden Kupplungsteil (Kupplungsstecker) ohne die Gefahr eines unkontrollierten Öffnens der Ventilhülse ermöglicht. Gemäß der Erfindung wird diese Aufgabe durch ein Kupplungsteil mit den Merkmalen des Patentanspruchs 1 gelöst.

Mit der Erfindung ist ein Kupplungsteil, insbesondere eine Kupplungsmuffe, zum Kuppeln mit einem korrespondierenden Kupplungsteil, insbesondere einem Kupplungsstecker, einer Kupplung für Druckmittelleitungen, insbesondere Hydraulikleitungen, bereitgestellt, die eine Kupplung des Kupplungsteils (Kupplungsmuffe) ohne Kraftaufwand mit einem korrespondierenden Kupplungsteil (Kupplungsstecker) ohne die Gefahr eines unkontrollierten Öffnens der Ventilhülse ermöglicht. Dadurch, dass die Ventilhülse innen einen umlaufenden Absatz aufweist, der in einem hohlzylindrischen Endabschnitt mündet, wobei der Innendurchmesser des hohlzylindrischen Endabschnitts geringfügig kleiner ist als der Außendurchmesser des Gleitabschnitts der Ventilhülse, ist gewährleistet, dass die Ventilhülse immer sicher schließt, wobei die auf die Ventilhülse wirkenden Betätigungskräfte jedoch hinreichend klein sind, um auch manuell kuppeln zu können.

Der Durchmesserunterschied ist hier möglichst klein gewählt, wobei der Betrag der Differenz zwischen dem Innendurchmesser des hohlzylindrischen Endabschnitts der Ventilhülse und dem Außendurchmesser des Gleitabschnitts der Ventilhülse weniger als acht zehntel, bevorzugt weniger als vier zehntel, besonders bevorzugt weniger als zwei zehntel Millimeter beträgt und/oder die vom Innendurchmesser der Ventilhülse eingeschlossene Kreisfläche um weniger als 12 mm², bevorzugt weniger als 8mm², besonders bevorzugt weniger als 4 mm² kleiner ist, als die vom Außendurchmesser der Ventilhülse eingeschlossene Kreisfläche.

In Weiterbildung der Erfindung ist die Ventilhülse in der ersten Position über einen in einer in dem Ventilstößelkopf angeordneten Dichtungsnut vorhandenen Dichtring gegen diesen abgedichtet, wobei die Dichtungsnut derart ausgebildet ist, dass sie den Dichtring um mehr als die Hälfte seiner Mantelfläche, vorzugsweise mehr als sechzig Prozent seiner Mantelfläche übergreift. Hierdurch ist verhindert, dass der Dichtring bei erhöhten Fluidströmungen beim Öffnen des Ventils unter einseitigem Druck aus seiner Position gebracht werden kann.

In Ausgestaltung der Erfindung ist der Dichtring eine Profildichtung mit unrundem, insbesondere polygonalem Querschnitt. Hierdurch ist einem Ausbringen des Dichtrings aus seiner Position weiter entgegengewirkt.

In weiterer Ausgestaltung der Erfindung ist an dem Ventilstößel ein Haltering angeordnet, der einen Teil der Dichtungsnut ausbildet und über den der Dichtring in seiner Position gehalten ist. Hierdurch ist die Sicherung der Position des Dichtrings weiter verbessert.

In Weiterbildung der Erfindung ist der Haltering auf dem Ventilstößel aufgeschraubt oder mit Übermaßpassung aufgepresst oder aufgeschrumpft. Hierdurch ist eine einfache Montage des Halterings erzielt. Alternativ kann der Haltering auch durch Umformung in einen Hinterschnitt formschlüssig mit dem Ventilstößel verbunden sein.

In alternativer Ausgestaltung der Erfindung ist die Ventilhülse in der ersten Position über eine metallische Dichtung gegenüber dem Ventilstößel abgedichtet. Hierdurch ist der Einsatz einer separaten Dichtung, insbesondere einer Weichdichtung, deren Position bei erhöhten Fluidströmungen beim Öffnen des Ventils unter einseitigem Druck möglicherweise aus ihrer Position gebracht werden könnte, nicht erforderlich.

In Weiterbildung der Erfindung ist das Gehäuse durch ein Basisteil gebildet, das mit einem Anschlussstück verbunden ist. Hierdurch ist ein zweiteiliges Gehäuse erzielt, wodurch die Montage des Kupplungsteils vereinfacht ist. Bevorzugt ist das Basisteil mit dem Anschlussstück verschraubt.

In Ausgestaltung der Erfindung ist der Muffeninnenkörper bereichsweise zwischen dem Basisteil und dem Anschlussstück gehalten. Hierdurch ist eine einfache Fixierung des Muffeninnenkörpers innerhalb des Kupplungsteils erzielt. Bevorzugt ist der Muffeninnenkörper über eine Dichtung gegenüber dem Anschlussstück abgedichtet.

In weiterer Ausgestaltung der Erfindung ist der Ventilstößel über wenigstens ein Halteelement ortsfest positioniert, über das er mit dem Gehäuse verbunden ist. Dabei erstreckt sich das Halteelement bevorzugt in axialer Richtung bereichsweise über das Anschlussteil und den Muffeninnenkörper. Hierdurch ist die Stabilität des Kupplungsteils verbessert.

In Weiterbildung der Erfindung weist das wenigstens eine Halteelement eine axiale Durchgangsöffnung auf. Hierdurch ist eine stabile Anordnung bei gleichzeitiger Gewährleistung des Fluiddurchflusses ermöglicht.

In Ausgestaltung der Erfindung ist an der Ventilhülse ein sich radial nach außen erstreckender Steg angeordnet, wobei zwischen diesem Steg und dem Muffeninnenkörper eine erste Federeinrichtung angeordnet ist, die gegen die Ventilhülse in Richtung der ersten Position vorgespannt ist. Hierdurch ist ein kontinuierlicher Anpressdruck der Ventilhülse an den Dichtsitz des Ventilstößels erzielt.

In weiterer Ausgestaltung der Erfindung ist den Ventilstößelkopf einfassend eine Verschlusshülse angeordnet, die verschiebbar zwischen dem Gehäuse und der Ventilhülse angeordnet ist, wobei in dem Gehäuse wenigstens eine radiale Durchführung eingebracht ist, in der eine Sperrkugel positioniert ist und ein Sperrring auf der Außenseite des Gehäuses verschiebbar angeordnet ist, der sich über die radiale Durchführung hinweg erstreckt. Hierdurch ist eine Arretierung der Ventilhülse in einer Öffnungsposition ermöglicht.

In weiterer Ausgestaltung der Erfindung ist zwischen der Verschlusshülse und dem Muffeninnenkörper eine zweite Federeinrichtung angeordnet, die gegen die Verschlusshülse vorgespannt ist, um sie in einer Position zu halten, in der die wenigstens eine radiale Durchführung durch die Verschlusshülse abgedeckt ist. Hierdurch ist eine ungewollte Arretierung der Ventilhülse verhindert.

Andere Weiterbildungen und Ausgestaltungen der Erfindung sind in den übrigen Unteransprüchen angegeben. Ausführungsbeispiele der Erfindung sind den Zeichnungen dargestellt und werden nachfolgend im Einzelnen beschrieben. Es zeigen:
- Fig. 1: die schematische Darstellung einer Kupplungsmuffe im Teilschnitt;
- Fig. 2: die Kupplungsmuffe aus Figur 1 mit gekoppeltem Kupplungsstecker im Teilschnitt;
- Fig. 3: die schematische Darstellung des Ventilstößels einer Kupplungsmuffe in einer zweiten Ausführungsform;
- Fig. 4: die Detaildarstellung des Ausschnitts "Z" der Kupplungsmuffe aus Fig. 3;
- Fig. 5: die schematische Darstellung des Ventilstößels einer Kupplungsmuffe in einer dritten Ausführungsform;
- Fig. 6: die Detaildarstellung des Ausschnitts "Z" der Kupplungsmuffe aus Fig. 5;
- Fig. 7: die schematische Darstellung des Ventilstößels einer Kupplungsmuffe in einer vierten Ausführungsform,
- Fig. 8: die Detaildarstellung des Ausschnitts "Z" der Kupplungsmuffe aus Fig. 7;
- Fig. 9: die schematische Darstellung einer Kupplungsmuffe in einer fünften Ausführungsform;
- Fig. 10: die schematische Darstellung einer Kupplungsmuffe in einer sechsten Ausführungsform und
- Fig. 11: die schematische Darstellung einer Kupplungsmuffe in einer siebten Ausführungsform.

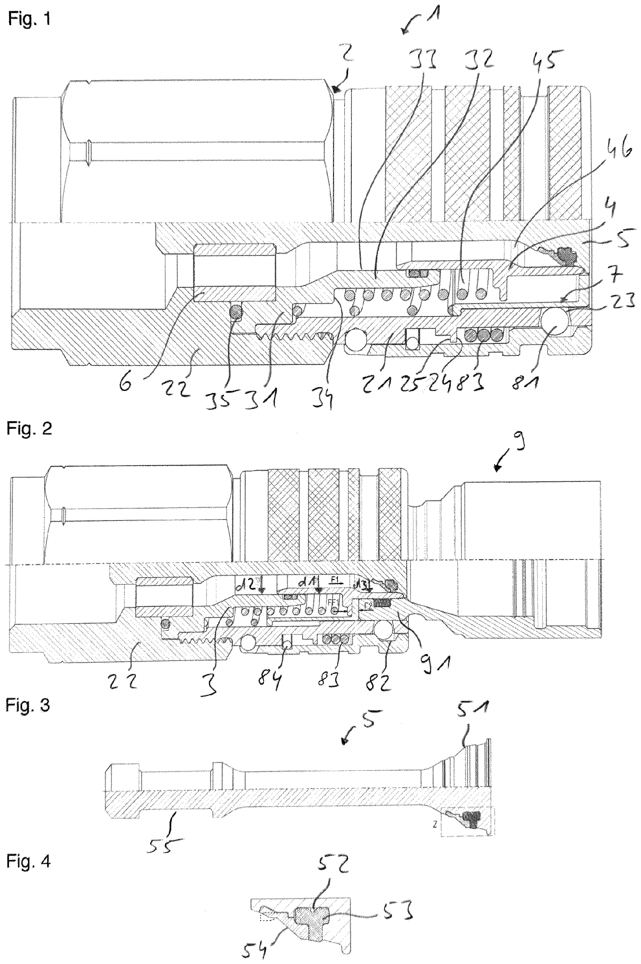

Das Kupplungsteil 1 gemäß Figur 1 ist eine Kupplungsmuffe für eine Hydraulickupplung, insbesondere eine Schnellkupplung an einer nicht weiter dargestellten Druckmittelleitung. Das Kupplungsteil 1 weist ein Gehäuse 2 auf, dass im Ausführungsbeispiel durch Basisteil 21 gebildet ist, das mit einem Anschlussstück 22 verschraubt ist. Das Gehäuse 2 ist hohl ausgebildet und weist einen in Axialrichtung verlaufenden ersten Durchgang auf.

In dem Gehäuse 2 sind ein Muffeninnenkörper 3, eine Ventilhülse 4 und ein Ventilstößel 5 angeordnet. Der Muffeninnenkörper 3 ist hülsenförmig ausgebildet und begrenzt einen mittleren zweiten Durchgang, der koaxial zum ersten Durchgang angeordnet ist. Endseitig weist der Muffeninnenkörper 3 einen umlaufenden Flansch 31 auf, der zwischen dem Basisteil 21 und dem Anschlussstück 22 des Gehäuses 2 eingespannt ist. An seinem dem Flansch 31 gegenüberliegenden Ende weist der Muffeninnenkörper 3 einen Führungsabschnitt 32 mit einer zylindrischen Innenmantelfläche 33 auf. Außen ist der Führungsabschnitt im Ausführungsbeispiel durch einen Absatz 34 begrenzt. Es ist jedoch nicht zwingend erforderlich, dass der innere Führungsabschnitt in axialer Ausdehnung bis zum äußeren Absatz 34 reicht. Der Muffeninnenkörper 3 ist über einen O-Ring 35 gegenüber dem Anschlussstück 22 abgedichtet.

Der Muffeninnenkörper 3 nimmt die Ventilhülse 4 auf, die mit einem endseitigen Gleitabschnitt 41 entlang der Innenmantelfläche des Führungsabschnitts 32 des Muffeninnenkörpers 3 axial verschieblich geführt und über zwei nebeneinander angeordnete O-Ringe 44 gegen den Führungsabschnitt 32 abgedichtet ist. Alternativ kann auch ein O-Ring 44 und ein neben diesem positionierter Stützring angeordnet sein. Der Außendurchmesser d1 des Gleitabschnitts 41 entspricht im Wesentlichen dem Innendurchmesser d2 des Führungsabschnitts 32. Der Gleitabschnitt 41 ist durch einen nach außen kragenden, umlaufenden Steg 42 begrenzt, an den sich ein hohlzylindrischer Endabschnitt 43 anschließt. Der Innendurchmesser d3 des Endabschnitts 43 der Ventilhülse 4 ist geringfügig kleiner als der Außendurchmesser d1 des Gleitabschnitts 41, der im Wesentlichen dem Innendurchmesser d2 des Führungsabschnitts 32 des Muffeninnenkörpers 3 entspricht. Zwischen den beiden verschiedenen Innendurchmessern der Ventilhülse 4 ist ein umlaufender Absatz 46 gebildet. Im Ausführungsbeispiel weisen der Innendurchmesser d3 des zylindrischen Endabschnitts 43 der Ventilhülse und der Außendurchmesser d1 des Gleitabschnitts 41 der Ventilhülse 4 zueinander eine Differenz von d1 - d3 = 0,1 Millimeter auf.

Der Ventilstößel 5 ist in dem ersten Durchgang des Gehäuses 2 koaxial zu diesem angeordnet und endseitig über zwei jeweils um 180 Grad versetzt zueinander angeordnete Haltelemente 6 in dem Gehäuse 2 ortsfest befestigt. Die Halteelemente 6 sind jeweils in einer hierzu in den Ventilstößel 5 eingebrachte Passnuten 55 eingesetzt und an ihrem dem Ventilstößel 5 gegenüberliegenden Endabschnitt zwischen dem Basisteil 21 und dem Anschlussstück 22 des Gehäuses 2 geführt, wobei der Muffeninnenkörper 3 zwischen dem Basisteil 21 und dem Anschlussstück 22 eingespannt ist. Zur Gewährleistung eines maximalen Durchflusses sind die Halteelemente 6 jeweils mit einer axialen Durchgangsöffnung 61 versehen. Im Ausführungsbeispiel sind die Halteelemente als separate Bauteile vorgesehen. Alternativ können diese auch einteiliger Bestandteil des Ventilstößels 5, des Muffeninnenkörpers 3 oder des Anschlussstücks 22 sein. (Im Falle der beiden letztgenannten Ausführungen müsste der Ventilstößel 5 anders befestigt, beispielsweise geschraubt sein.)

An seinem dem Haltelement 6 gegenüberliegenden Ende weist der Ventilstößel 5 einen Ventilstößelkopf 51 auf, der mit einer umlaufenden Dichtungsnut 52 versehen ist, in die ein Dichtring 53 mit nicht rundem Querschnitt eingebracht ist. Die Dichtungsnut 52 ist über einen Haltering 54 ergänzt, der mittels Umformung formschlüssig mit dem Ventilstößelkopf 51 verbunden ist und den Dichtring bereichsweise überdeckt, wodurch dieser in seiner Position gehalten wird.

Den Führungsabschnitt 32 des Muffeninnenkörpers 3 umgebend ist eine Druckfeder in Form einer Spiralfeder 45 angeordnet, die mit einem Ende an dem Absatz 34 anliegt und mit ihrem gegenüberliegenden Ende gegen der umlaufenden Steg 42 der Ventilhülse 4 vorgespannt ist. Die Ventilhülse 4 ist so über die Spiralfeder 45 in einer ersten Position (Verschließposition) gehalten, in der sie mit ihrem Endabschnitt 43 über den Dichtring 53 dichtend an dem Ventilstößelkopf 51 anliegt.

Der durch den beschriebenen Aufbau der Komponenten Ventilhülse 4, Muffeninnenkörper 3, Halteelement 6, Anschlussstück 22 und Ventilstößel 5 im inneren der flachdichtenden Kupplungsmuffe 1 begrenzte Kanal dient dem Fluid als Strömungskanal.

Durch die erfindungsgemäße Gestaltung der Ventilhülse 4 mit einem Außendurchmesser d1, der durch den Innendurchmesser d2 des Muffeninnenkörpers 3 geführt ist, und dem abgesetzten Durchmesser d3 des Endabschnitts 43 der Ventilhülse 4, der wenige Zehntelmillimeter kleiner ist als die Durchmesser d2 und d3, ist bewirkt, dass bei einem Druckanstieg im Strömungskanal, verursacht durch das Fluid eine resultierende Kraft (F1) in axialer Richtung entsteht, welche zusammen mit der Federkraft (FF1) der Spiralfeder 45 die Ventilhülse 4 über den Dichtring 53 gegen den Ventilstößelkopf 51 drückt.

Den Ventilstößelkopf 51 einfassend ist in dem Gehäuse 2 weiterhin eine Verschlusshülse 7 angeordnet, die einen ringförmigen radial nach innen kragenden Kragen 71 aufweist und die verschiebbar zwischen dem Gehäuse 2 und der Ventilhülse gelagert ist. An ihrem dem Kragen 71 gegenüberliegenden Ende weist die Verschlusshülse 7 einen umlaufenden, nach außen kragenden Steg 72 auf. Zwischen dem Flansch 31 des Muffeninnenkörpers 3 und der Verriegelungshülse 7 ist eine Druckfeder in Form einer Spiralfeder 73 angeordnet, über welche die Verschlusshülse 7 in einer Endposition gehalten ist, in welcher der Steg 71 auf einer Ebene mit dem Ventilstößelkopf 51 liegt und mit ihrem Kragen 72 an einem innen an dem Basisteil 21 des Gehäuses 2 angeordneten Absatz 26 anliegt. In dieser Position überdeckt die Verschlusshülse 7 umlaufend in dem Basisteil 21 des Gehäuses 2 eingebrachte radiale Durchführungen 23, die konisch zulaufend ausgebildet sind und in denen jeweils eine Sperrkugel 81 positioniert ist.

Auf der Außenseite des Basisteils 21 ist eine Sperrhülse 8 verschiebbar angeordnet, die innen eine umlaufende Nut 82 zur Aufnahme eines Abschnitts der Sperrkugeln 81 aufweist. Die Sperrhülse 8 ist über eine Spiralfeder 83, die an einem Absatz 24 des Basisteils 21 anliegt, gegen die Sperrkugeln 81 vorgespannt. Beabstandet zu der Spiralfeder 83 ist in der Sperrhülse 8 innen ein Sicherungsring 84 eingebracht. Der Sicherungsring 84 begrenzt im Zusammenspiel mit einem an dem Basisteil 21 außen angeordneten Anschlag 25 die axiale Bewegung der Sperrhülse 8 entlang des Basisteils 21.

Beim Kuppeln, also zum Herstellen einer mechanischen und fluidischen Verbindung zwischen dem Kupplungsteil 1 und einem Kupplungsstecker 9 wird während des Kuppelvorgangs die Verschlusshülse 7 durch einen an dem Kupplungsstecker 9 angeordneten ringförmigen Ansatz 91 entgegen der Federkraft der Spiralfeder 73 in Richtung des Steges 42 der Ventilhülse 4 geschoben, bis der Kragen 71 an diesem Steg 42 anliegt (vgl. Figur 2). Sodann wird die Ventilhülse 4 über den Steg 42 gegen die Federkraft der Spiralfeder 45 mitbewegt, wodurch ein Spalt zwischen der Ventilhülse 4 und dem Dichtring 53 entsteht. Über diesen Spalt kann das unter Druck stehende Fluid mit hoher Strömungsgeschwindigkeit in den Strömungskanal des Kupplungssteckers 9 entweichen.

Hierbei verhindert der an dem Ventilstößelkopf 51 befestigte Haltering 54, dass der Dichtring 53 in seiner Position verbleibt und nicht durch die Strömung mitgerissen wird.

Durch die Verschiebung der Verschlusshülse 7 werden die Durchführungen 23 des Basisteils 2 freigegeben, wodurch die in diesen positionierten Sperrkugeln 81 mit einem Kugelabschnitt durch die Durchführungen 23 hindurchtreten. In dieser Position ragen die Sperrkugeln 81 nicht mehr nach innen aus den Durchführungen 23 hinaus, weshalb die Sperrhülse durch die Federvorspannung der Spiralfeder 83 über die Durchführungen 23 bewegt wird, bis der Sicherungsring 84 an den Anschlag 25 des Basisteils 21 anliegt.

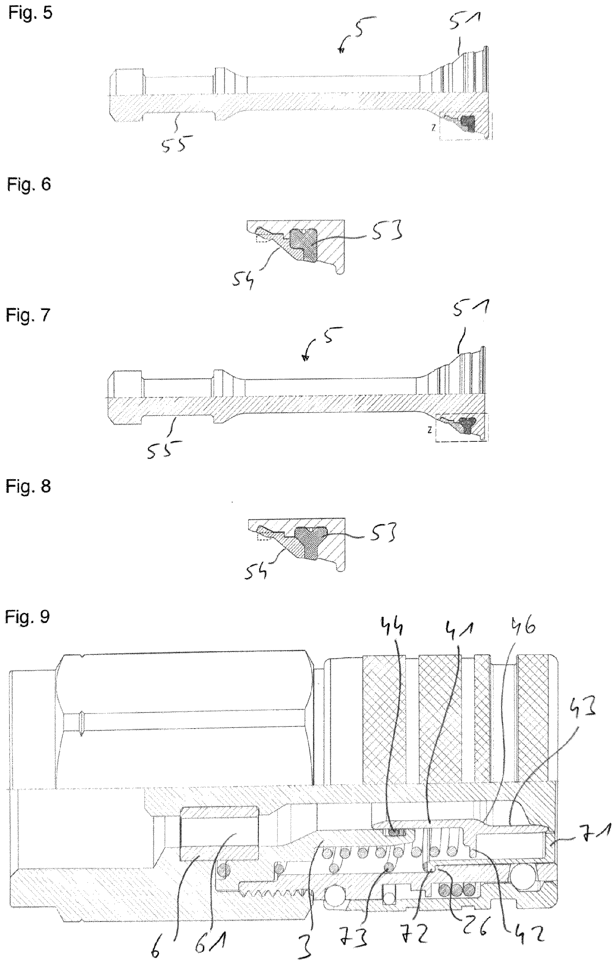

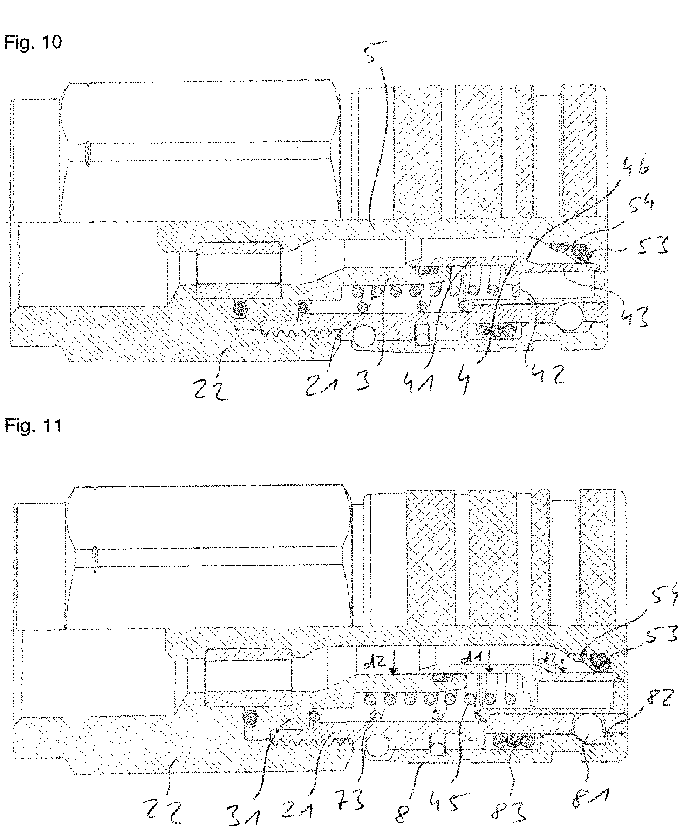

In den Figuren 3 bis 11 sind Ausführungsbeispiele mit verschiedenen Dichtungsanordnungen zur Abdichtung des Endabschnitts 43 der Ventilhülse 4 und dem Ventilstößelkopf 51 gezeigt. Die Kombination aus Dichtungsnut 52 und Haltering 54 (nicht vorhanden im Ausführungsbeispiel gemäß Figur 9) lässt für den Dichtring 53 einen Hohlraum entstehen, in den der Dichtring 53 mit seiner jeweiligen unrunden Geometrie optimal formschlüssig eingepasst werden kann. Der Haltering 54 kann dabei beispielsweise durch Umformung in einen Hinterschnitt des Ventilstößelkopfes 51 formschlüssig mit diesem verbunden sein (vgl. Figuren 1 bis 8), mit diesem verschraubt sein (vgl. Figur 10) oder auch auf diesen mit Übermaßpassung aufgeschrumpft sein (vgl. Figur 11). Alternativ zu den Anordnungen eines Dichtungsrings kann auch eine metallische Dichtfläche zwischen dem Ventilstößelkopf 51 und dem Endabschnitt 43 der Ventilhülse 4 vorgesehen sein.

Beim Abkuppeln, also zum Lösen der mechanischen und fluidischen Verbindung zwischen dem Kupplungsteil 1 und einem Kupplungsstecker 9 wird die Sperrhülse 8 gegen die Federkraft der Spiralfeder 83 soweit verschoben, bis die Nut 82 über den Durchführungen 23 des Basisteils 21 positioniert ist. Durch die Federkraft der Spiralfeder 45 wird die Ventilhülse 4 mit ihrem Endabschnitt 43 gegen den Ventilstößelkopf 51 gepresst, wo sie durch den Dichtring 53 gegen den Ventilstößelkopf 51 abgedichtet ist. Gleichzeitig wird die Verschlusshülse 7 durch die Federkraft der Spiralfeder 73 in ihre Ausgangsposition bewegt, wo sie mit dem umlaufenden Steg 72 an dem Absatz 26 des Basisteils 21 anliegt. Hierbei wird der Kupplungsstecker 9 mit seinem Ansatz 91 aus dem Kupplungsteil 1 herausbewegt. Zugleich werden die Sperrkugeln 81 radial vollständig in die Durchführungen 23 sowie die über diese positionierte Nut 82 der Sperrhülse 8 bewegt. Der Abkuppelvorgang ist nun abgeschlossen; die Sperrhülse kann losgelassen werden, wonach diese durch die Federkraft der Spiralfeder 83 gegen die in die Nut 82 hineinragenden Abschnitte der Sperrkugeln 81 gedrückt wird.

## Patentansprüche

1. Kupplungsteil (1), insbesondere Kupplungsmuffe, zum Kuppeln mit einem korrespondierenden Kupplungsteil, insbesondere einem Kupplungsstecker (9), einer Kupplung für Druckmittelleitungen, insbesondere Hydraulikleitungen, umfassend
- ein Gehäuse (2), mit einem durchgehenden, in Axialrichtung verlaufenden ersten Durchgang,
- einen Ventilstößel (5), der in dem ersten Durchgang des Gehäuses (2) koaxial angeordnet ist,
- einen Muffeninnenkörper (3), der in dem ersten Durchgang des Gehäuses (2) an diesem bereichsweise anliegend koaxial angeordnet ist und der einen zylindrischen Führungsabschnitt (32) aufweist, durch den ein mittlerer zweiter Durchgang begrenzt ist, der koaxial zu dem ersten Durchgang angeordnet ist,
- eine Ventilhülse (4), die in Axialrichtung zwischen einer ersten Position und einer zweiten Position relativ zu dem Muffeninnenkörper (3) verschiebbar angeordnet ist, durch dessen Führungsabschnitt (32) sie entlang der Innenmantelfläche des Führungsabschnitts (32) an einem endseitigen Gleitabschnitt (41) der Ventilhülse (4) axial geführt ist, wobei die Ventilhülse (4) sowohl in der ersten Position als auch in der zweiten Position gegenüber dem Muffeninnenkörper (3) abdichtet, und in der ersten Position an dem Ventilstößel (5) abdichtet und in der zweiten Position einen Spalt zwischen dem Ventilstößel (5) und der Ventilhülse (4) begrenzt,
wobei in der ersten Position der Ventilhülse (4) durch den Muffeninnenkörper (3), die Ventilhülse (4) und den Ventilstößel (5) ein Strömungskanal begrenzt ist, wobei die Ventilhülse (4) innen einen umlaufenden Absatz (46) aufweist, der in einem hohlzylindrischen Endabschnitt (43) mündet, wobei der Innendurchmesser (d3) des hohlzylindrischen Endabschnitts (43) geringfügig kleiner ist, als der Außendurchmesser (d1) des Gleitabschnitts (41) der Ventilhülse (4), **dadurch gekennzeichnet,**
**dass** der Betrag der Differenz zwischen dem Innendurchmesser (d3) des hohlzylindrischen Endabschnitts (43) der Ventilhülse (4) und dem Außendurchmesser (d1) des Gleitabschnitts (41) der Ventilhülse (4) weniger als acht zehntel Millimeter beträgt
und/oder dass
die vom Innendurchmesser (d3) der Ventilhülse (4) eingeschlossene Kreisfläche um weniger als 12 mm² kleiner ist, als die vom Außendurchmesser (d1) der Ventilhülse (4) eingeschlossene Kreisfläche.

2. Kupplungsteil nach Anspruch 1, **dadurch gekennzeichnet, dass** der Betrag der Differenz zwischen dem Innendurchmesser (d3) des hohlzylindrischen Endabschnitts (43) der Ventilhülse (4) und dem Außendurchmesser (d1) des Gleitabschnitts (41) der Ventilhülse (4) weniger als vier zehntel, bevorzugt weniger als zwei zehntel Millimeter beträgt.

3. Kupplungsteil nach Anspruch 1, **dadurch gekennzeichnet, dass** die vom Innendurchmesser (d3) der Ventilhülse (4) eingeschlossene Kreisfläche um weniger als 8mm², bevorzugt weniger als 4 mm² kleiner ist, als die vom Außendurchmesser (d1) der Ventilhülse (4) eingeschlossene Kreisfläche.

4. Kupplungsteil nach einem der vorgenannten Ansprüche, **dadurch gekennzeichnet, dass** die Ventilhülse (4) in der ersten Position über einen in einer in dem Ventilstößelkopf (51) angeordneten Dichtungsnut (52) vorhandenen Dichtring (53) gegen diesen abgedichtet ist, wobei die Dichtungsnut (52) derart ausgebildet ist, dass sie den Dichtring (53) um mehr als die Hälfte seiner Mantelfläche, vorzugsweise mehr als sechzig Prozent seiner Mantelfläche übergreift.

5. Kupplungsteil nach Anspruch 4, **dadurch gekennzeichnet, dass** der Dichtring (53) eine Profildichtung mit unrundem Querschnitt ist.

6. Kupplungsteil nach Anspruch 4 oder 5, **dadurch gekennzeichnet, dass** an dem Ventilstößel (5) ein Haltering (54) angeordnet ist, der einen Teil der Dichtungsnut (52) ausbildet und über den der Dichtring (53) in seiner Position gehalten ist.

7. Kupplungsteil nach Anspruch 6, **dadurch gekennzeichnet, dass** der Haltering (54) auf dem Ventilstößel (5) aufgeschraubt oder mit Übermaßpassung aufgepresst oder aufgeschrumpft ist.

8. Kupplungsteil nach Anspruch 6, **dadurch gekennzeichnet, dass** der Haltering (54) durch Umformung mit dem Ventilstößel (5) formschlüssig verbunden ist.

9. Kupplungsteil nach einem der Ansprüche 1 bis 3, **dadurch gekennzeichnet, dass** die Ventilhülse(4) in der ersten Position über eine metallische Dichtung gegenüber dem Ventilstößel (3) abgedichtet ist.

10. Kupplungsteil nach einem der vorgenannten Ansprüche, **dadurch gekennzeichnet, dass** das Gehäuse (2) durch ein Basisteil (21) gebildet ist, das mit einem Anschlussstück (22) verbunden ist, vorzugsweise mit diesem verschraubt ist.

11. Kupplungsteil nach Anspruch 10, **dadurch gekennzeichnet, dass** der Muffeninnenkörper (3) bereichsweise zwischen dem Basisteil (21) und dem Anschlussstück (22) gehalten ist.

12. Kupplungsteil nach Anspruch 11, **dadurch gekennzeichnet, dass** der Muffeninnenkörper (3) über eine Dichtung gegenüber dem Anschlussstück abgedichtet ist.

13. Kupplungsteil nach einem der vorgenannten Ansprüche, **dadurch gekennzeichnet, dass** der Ventilstößel (5) über wenigstens ein Halteelement (6) ortsfest positioniert ist, über den er mit dem Gehäuse (2) verbunden ist.

14. Kupplungsteil nach Anspruch 13 und einem der Ansprüche 11 und 12, **dadurch gekennzeichnet, dass** sich das Halteelement (6) in axialer Richtung bereichsweise über das Anschlussteil (22) und den Muffeninnenkörper (3) erstreckt.

15. Kupplungsteil nach Anspruch 13 oder 14, **dadurch gekennzeichnet, dass** das wenigstens eine Halteelement (6) eine axiale Durchgangsöffnung (61) aufweist.

16. Kupplungsteil nach einem der vorgenannten Ansprüche, **dadurch gekennzeichnet, dass** an der Ventilhülse (4) ein sich radial nach außen erstreckender Steg (42) angeordnet ist, wobei zwischen diesem Steg (42) und dem Muffeninnenkörper (3) eine erste Federeinrichtung angeordnet ist, die gegen die Ventilhülse(4) in Richtung der ersten Position vorgespannt ist.

17. Kupplungsteil nach einem der vorgenannten Ansprüche, **dadurch gekennzeichnet, dass** den Ventilstößelkopf (51) einfassend eine Verschlusshülse (7) angeordnet ist, die verschiebbar zwischen dem Gehäuse (2) und der Ventilhülse (4) angeordnet ist, wobei in dem Gehäuse (2) wenigstens eine radiale Durchführung (23) eingebracht ist, in der ein Sperrelement, bevorzugt eine Sperrkugel (81) positioniert ist und ein Sperrring (8) auf der Außenseite des Gehäuses (2) verschiebbar angeordnet ist, der sich über die radiale Durchführung (23) hinweg erstreckt.

18. Kupplungsteil nach Anspruch 17, **dadurch gekennzeichnet, dass** zwischen der Verschlusshülse (7) und dem Muffeninnenkörper (3) eine zweite Federeinrichtung angeordnet ist, die gegen die Verschlusshülse (7) vorgespannt ist, um sie in einer Position zu halten, in der die wenigstens eine radiale Durchführung (23) durch die Verschlusshülse (7) abgedeckt ist.

## Claims

1. Coupling part (1), in particular coupling sleeve, for coupling with a corresponding coupling part, in particular a coupling plug (9), of a coupling for pressure medium lines, in particular hydraulic lines, comprising
- a housing (2) with a continuous first passage extending in the axial direction,
- a valve tappet (5), which is coaxially arranged in the first passage of the housing (2),
- a sleeve inner body (3), which is coaxially arranged in the first passage of the housing (2) resting thereagainst in certain regions and which has a cylindrical guide section (32), by which a central second passage is delimited, which is arranged coaxially to the first passage,
- a valve sleeve (4), which is displaceably arranged in the axial direction between a first position and a second position relative to the sleeve inner body (3), through the guide section (32) of which it is axially guided along the inner surface of the guide section (32) on an end-side sliding section (41) of the valve sleeve (4), wherein the valve sleeve (4) seals against the sleeve inner body (3) in the first position as well as in the second position, and seals against the valve tappet (5) in the first position and delimits a gap between the valve tappet (5) and the valve sleeve (4) in the second position,
wherein, in the first position of the valve sleeve (4), a flow channel is delimited by the sleeve inner body (3), the valve sleeve (4) and the valve tappet (5), wherein the valve sleeve (4) has a circumferential shoulder (46) on the inside, which opens into a hollow cylindrical end section (43), wherein the inner diameter (d3) of the hollow cylindrical end section (43) is slightly smaller than the outer diameter (d1) of the sliding section (41) of the valve sleeve (4), **characterised in that**
the amount of the difference between the inner diameter (d3) of the hollow-cylindrical end section (43) of the valve sleeve (4) and the outer diameter (d1) of the sliding section (41) of the valve sleeve (4) is less than eight tenths of a millimetre
and/or **in that**
the circular area enclosed by the inner diameter (d3) of the valve sleeve (4) is smaller by less than 12 mm² than the circular area enclosed by the outer diameter (d1) of the valve sleeve (4).

2. Coupling part according to claim 1, **characterised in that** the amount of the difference between the inner diameter (d3) of the hollow cylindrical end section (43) of the valve sleeve (4) and the outer diameter (d1) of the sliding section (41) of the valve sleeve (4) is less than four tenths, preferably less than two tenths of a millimetre.

3. Coupling part according to claim 1, **characterised in that** the circular area enclosed by the inner diameter (d3) of the valve sleeve (4) is smaller by less than 8 mm², preferably less than 4 mm², than the circular area enclosed by the outer diameter (d1) of the valve sleeve (4).

4. Coupling part according to one of the previous claims, **characterised in that** the valve sleeve (4) is sealed against the valve tappet head (51) in the first position via a sealing ring (53) provided in a sealing groove (52) arranged in the valve tappet head (51), wherein the sealing groove (52) is designed in such a manner that it engages over the sealing ring (53) by more than half of its outer surface, preferably more than sixty percent of its outer surface.

5. Coupling part according to claim 4, **characterised in that** the sealing ring (53) is a profile seal with a non-circular cross-section.

6. Coupling part according to claim 4 or 5, **characterised in that** a retaining ring (54) is arranged on the valve tappet (5), which forms part of the sealing groove (52) and via which the sealing ring (53) is held in its position.

7. Coupling part according to claim 6, **characterised in that** the retaining ring (54) is screwed onto the valve tappet (5) or pressed or shrink-fitted onto it with an interference fit.

8. Coupling part according to claim 6, **characterised in that** the retaining ring (54) is positively connected to the valve tappet (5) by forming.

9. Coupling part according to one of claims 1 to 3, **characterised in that** the valve sleeve (4) is sealed in the first position against the valve tappet (5) via a metallic seal.

10. Coupling part according to one of the previous claims, **characterised in that** the housing (2) is formed by a base part (21), which is connected, preferably screwed, to a connecting piece (22).

11. Coupling part according claim 10, **characterised in that** the sleeve inner body (3) is held in certain regions between the base part (21) and the connecting piece (22).

12. Coupling part according to claim 11, **characterised in that** the sleeve inner body (3) is sealed against the connecting piece via a seal.

13. Coupling part according to one of the previous claims, **characterised in that** the valve tappet (5) is stationarily positioned via at least one retaining element (6), via which it is connected to the housing (2).

14. Coupling part according to claim 13 and one of claims 11 and 12, **characterised in that** the retaining element (6) extends in the axial direction over the connecting part (22) and the sleeve inner body (3) in certain regions.

15. Coupling part according to claim 13 or 14, **characterised in that** the at least one retaining element (6) has an axial passage opening (61).

16. Coupling part according to one of the previous claims, **characterised in that** a radially outwardly extending web (42) is arranged on the valve sleeve (4), wherein a first spring device is arranged between this web (42) and the sleeve inner body (3), which is pretensioned against the valve sleeve (4) in the direction of the first position.

17. Coupling part according to one of the previous claims, **characterised in that** a locking sleeve (7) enclosing the valve tappet head (51) is arranged, which is displaceably arranged between the housing (2) and the valve sleeve (4), wherein at least one radial passage (23) is inserted in the housing (2), in which a locking element, preferably a locking ball (81), is positioned and a locking ring (8) is displaceably arranged on the outside of the housing (2), which extends beyond the radial passage (23).

18. Coupling part according to claim 17, **characterised in that** a second spring device is arranged between the locking sleeve (7) and the sleeve inner body (3), which is pretensioned against the locking sleeve (7) in order to hold it in a position in which the at least one radial passage (23) is covered by the locking sleeve (7).

## Revendications

1. Pièce d'accouplement (1), en particulier manchon d'accouplement, pour le couplage avec une pièce d'accouplement correspondante, en particulier un connecteur d'accouplement (9), un accouplement pour conduites de fluide sous pression, notamment des conduites hydrauliques, comprenant
- un boîtier (2) avec un premier orifice de passage traversant en direction axiale,
- un poussoir (5) de soupape disposé coaxialement dans le premier orifice de passage du boîtier (2),
- un corps intérieur (3) de manchon, corps qui est disposé coaxialement dans le premier orifice de passage traversant du boîtier (2), en appui localement contre ce dernier, et qui présente un segment de guidage (32) cylindrique à travers lequel est délimité un deuxième orifice médian de passage traversant, orifice qui est disposé coaxialement au premier passage traversant,
- une douille (4) de soupape qui est disposée coulissante en direction axiale entre une première position et une deuxième position relativement au corps intérieur (3) de manchon, à travers le segment de guidage (32) duquel elle est guidée axialement le long de la surface enveloppante intérieure du segment de guidage (32) contre un segment de glissement (41) terminal de la douille (4) de soupape,
sachant que la douille (4) de soupape, aussi bien sur la première position que sur la deuxième position, étanchéise par rapport au corps intérieur (3) de manchon, et étanchéise sur la première position contre le poussoir (5) de soupape et délimite, sur la deuxième position, un interstice entre le poussoir (5) de soupape et la douille (4) de soupape,
sachant que sur la première position de la douille (4) de soupape un conduit d'écoulement est délimité par le corps intérieur (3) de manchon, la douille (4) de soupape et le poussoir (5) de soupape,
sachant que la douille (4) de soupape présente à l'intérieur un épaulement (46) périphérique qui débouche dans un segment terminal (43) cylindrique creux,
sachant que le diamètre intérieur (d3) du segment terminal (43) cylindrique creux est légèrement inférieur au diamètre extérieur (d1) du segment de glissement (41) de la douille (4) de soupape, **caractérisée en ce**
**que** le quantum de différence entre le diamètre intérieur (d3) du segment terminal (43) cylindrique creux de la douille (4) de soupape et le diamètre extérieur (d1) du segment de glissement (41) de la douille (4) de soupape est inférieur à huit dixièmes de millimètre et/ou que la surface circulaire délimitée par le diamètre intérieur (d3) de la douille (4) de soupape est inférieure de moins de 12 mm² à la surface circulaire délimitée par le diamètre extérieur (d1) de la douille (4) de soupape.

2. Pièce d'accouplement selon la revendication 1, **caractérisée en ce que** le quantum de différence entre le diamètre intérieur (d3) du segment terminal (43) cylindrique creux de la douille (4) de soupape et le diamètre extérieur (d1) du segment de glissement (41) de la douille (4) de soupape est inférieur à quatre dixièmes de millimètre, de préférence inférieur à deux dixièmes de millimètre.

3. Pièce d'accouplement selon la revendication 1, **caractérisée en ce que** la surface circulaire délimitée par diamètre intérieur (d3) de la douille (4) de soupape est inférieure de moins de 8 mm², de préférence de moins de 4 mm², à la surface circulaire délimitée par le diamètre extérieur (d1) de la douille (4) de soupape.

4. Pièce d'accouplement selon l'une des revendications précédentes, **caractérisée en ce que** la douille (4) de soupape, sur la première position, est étanchéisée par rapport à une bague d'étanchéité (53) présente dans une gorge (52) pour joint disposée dans la tête (51) du poussoir de soupape, sachant que la gorge (52) pour joint est configurée de sorte qu'elle dépasse la bague d'étanchéité (53) sur plus de la moitié de sa surface enveloppante, de préférence sur plus de soixante pour cent de sa surface enveloppante.

5. Pièce d'accouplement selon la revendication 4, **caractérisée en ce que** la bague d'étanchéité (53) est un joint profilé présentant une section non ronde.

6. Pièce d'accouplement selon la revendication 4 ou 5, **caractérisée en ce que** contre le poussoir (5) de soupape est disposée une bague de retenue (54) qui forme une partie de la gorge (52) pour joint et via laquelle la bague d'étanchéité (53) est maintenue sur sa position.

7. Pièce d'accouplement selon la revendication 6, **caractérisée en ce que** la bague de retenue (54) est vissée sur le poussoir (5) de soupape ou qu'elle est pressée ou frettée dessus avec une surcote d'ajustement.

8. Pièce d'accouplement selon la revendication 6, **caractérisée en ce que** la bague de retenue (54) est reliée par déformation et adhérence de formes avec le poussoir (5) de soupape.

9. Pièce d'accouplement selon l'une des revendications 1 à 3, **caractérisée en ce que** la douille (4) de soupape est étanchéisée, sur la première position, via un joint métallique par rapport au poussoir (3) de soupape.

10. Pièce d'accouplement selon l'une des revendications précédentes, **caractérisée en ce que** le boîtier (2) est formé par une pièce de base (21) reliée avec une pièce de raccordement (22), de préférence vissée avec cette dernière.

11. Pièce d'accouplement selon la revendication 10, **caractérisée en ce que** le corps intérieur (3) de manchon est maintenu localement entre la pièce de base (21) et la pièce de raccordement (22).

12. Pièce d'accouplement selon la revendication 11, **caractérisée en ce que** le corps intérieur (3) de manchon est étanchéisé via un joint par rapport à la pièce de raccordement.

13. Pièce d'accouplement selon l'une des revendications précédentes, **caractérisée en ce que** le poussoir (5) de soupape est positionné immobile via au moins un élément de retenue (6) via lequel il est relié au boîtier (2).

14. Pièce d'accouplement selon la revendication 13 et l'une des revendications 11 ou 12, **caractérisée en ce que** l'élément de retenue (6) s'étend localement en direction axiale sur l'élément de raccordement (22) et du corps intérieur (3) de manchon.

15. Pièce d'accouplement selon la revendication 13 ou 14, **caractérisée en ce qu'**au moins un élément de retenue (6) présente un orifice de passage (61) traversant axial.

16. Pièce d'accouplement selon l'une des revendications précédentes, **caractérisée en ce que** sur la douille (4) de soupape est disposée une nervure (42) s'étendant radialement vers l'extérieur, sachant qu'entre cette nervure (42) et le corps intérieur (3) de manchon est disposé un premier dispositif à ressort qui est précontraint contre la douille (4) de soupape en direction de la première position.

17. Pièce d'accouplement selon l'une des revendications précédentes, **caractérisée en ce qu'**est disposée une douille (7) d'obturation entourant la tête (51) du poussoir de soupape, douille qui est disposée déplaçable entre le boîtier (2) et la douille (4) de soupape, sachant que dans le boîtier (2) est ménagé au moins un passage traversant (23) radial dans lequel est positionné un élément de blocage, de préférence une bille de blocage (81), et qu'une bague de blocage (8) est disposée déplaçable sur le côté extérieur du boîtier (2), qui s'étend sur le passage traversant radial (23) et au-delà.

18. Pièce d'accouplement selon la revendication 17, **caractérisée en ce qu'**entre la douille d'obturation (7) et le corps intérieur (3) de manchon est disposé un deuxième dispositif à ressort précontraint contre la douille d'obturation (7) pour la maintenir sur une position dans laquelle au moins un passage traversant (23) radial est recouvert par la douille d'obturation (7).
